# EUROPEAN PATENT APPLICATION

(11) **EP 1 032 228 A2**
(43) Date of publication of application: **30.08.2000**
(21) Application number: 00301077.4
(22) Date of filing: 11.02.2000
(51) Int. Cl.: H04Q 7/32, H04M 1/725

(54) **A method and a cellular telecommunication apparatus for converting currencies**

(30) Priority: 22.02.1999 GB 9904009
(71) Applicant: NOKIA MOBILE PHONES LTD., 02150 Espoo (FI)
(72) Inventor: Hansen, Hans, 2300 Kobenhavn S (DK); Heikkila, Kari, 4000 Roskilde (DK); Blants, Lioudmila, 02170 Espoo (FI); Beletski, Oleg, 00210 Helsinki (FI)
(74) Representative: Jeffery, Kendra Louise

(57) **Abstract**

A cellular telecommunication apparatus (1) and a method for converting currencies, wherein the apparatus comprises transceiver means (19), input means (7-10), output means (3), and control means (18). The transceiver means (19) is arranged to send/receive a request/respond to/from a telecommunication network. The input means (7-10) is arranged to give an input (310) of a representation of a first currency. The output means (3) is arranged to display (340) a value of the first currency converted into a second currency. The control means (18) is operatively arranged to said transceiver (19) means, input means (7-10) and output means (3). The transceiver means (19) is further arranged to send a request (320) to the network. The request comprising a question about the value of the first currency, inputted to the input means (7-10), converted into the second currency. The transceiver means is also arranged to receive a respond (330) comprising information about the second currency. The control means (18) is further arranged to display (340) the second currency, received from the network, on the output means (3).

## Description

The present invention relates to a cellular telecommunication apparatus and to a method for converting currencies, according to the preamble of claims 1, 6, 11 and 15, respectively.

When travelling between different countries, it may cause some difficulties when the traveller needs to convert the foreign currency into his/her domestic currency. Naturally, there are people who are good at mental arithmetic, and can provide a conversion fairly easy. For those who are not that well trained in mental arithmetic, they can always use an ordinary pocket calculator. However, independent of if you are good at mental arithmetic or not, there will still be a problem to know what the present value of a foreign currency is, if the currency is not bound to a fixed exchange rate, like e.g. the German mark is to the European euro. Today, the value of different currencies changes more or less every day, and it is sometimes difficult to follow the changes every day. For example, if you are in a country which have newspapers in a foreign language, it is not always that easy to find information about the currencies in the newspaper, especially if you are not familiar with the foreign language.

One solution for the travellers, who need to convert currencies, could be to use a cellular phone, provided with a feature to store an exchange rate in a memory provided in the phone. After the user has stored the preferred exchange rate, it can be possible for the user to either choose to convert from a domestic value to a foreign, or vice versa. This feature is implemented in e.g. a cellular phone called Nokia 8810™. Even if this feature works very well on Nokia 8810, the user has to update the currencies herself/himself when a change of the value occurs. Therefore, it would be very useful to facilitate the use of a currency converter in a cellular phone, so the user does not have to be worried about any changes in the exchange rate of a currency outside his/hers knowledge. Thus, it is a problem that you cannot update a currency automatically.

On the Internet it can be quite easy to receive information about the value of different currencies, see e.g. http://cnn.com/TRAVEL/ESSENTIALS/ which provides a currency converter service and says it is updated once a day. However, even if the traveller has an Internet connection, it might be very unpractical in some situations. For example, if the user is in a shop and want to buy something in a country having a foreign currency. In this situation, it would probably be more convenient to use a cellular phone or a calculator, rather than a computer and get connected to e.g. the Internet, in order to convert the value of the foreign currency into a domestic currency.

US-A-5,077,804 discloses a facsimile telecommunications system for automatically converting monetary amounts in a document from one currency to a second currency. The system is an apparatus which transfers financial types of documents and transactions. Even if the system provides the possibility to convert amounts automatically, the system seems to be to complex and would most likely not be suitable for travellers, who would like to have a rapid answer about a currency.

The main object of the present invention is to provide a cellular telecommunication apparatus, which is able to update the exchange rate of different currencies automatically.

These objects are achieved in accordance with the present invention by claims 1, 6, 11 and 15, respectively.

One particular advantage of the invention is that it is possible to provide an update of different currencies, by sending a request to a network, which can provide information about exchange rates in different currencies as a respond to the sent request. Thus, under normal conditions the user receives a respond automatically when the request has been sent to the network, which facilitates the use of a currency converter.

Further advantages of the present invention will be apparent from the dependent claims.

The invention will be described in greater detail in the following by way of example only and with reference to the attached drawings, in which
Figure 1 schematically illustrates a preferred embodiment of a hand portable phone according to the present invention,
Figure 2 schematically shows the essential parts of a telephone for communicating with a cellular or cordless network,
Figure 3a-c shows an example of a user interface in a phone according to the present invention, and
Figure 4 shows a flowchart of a method to convert different currencies in a phone, in accordance with the present invention.

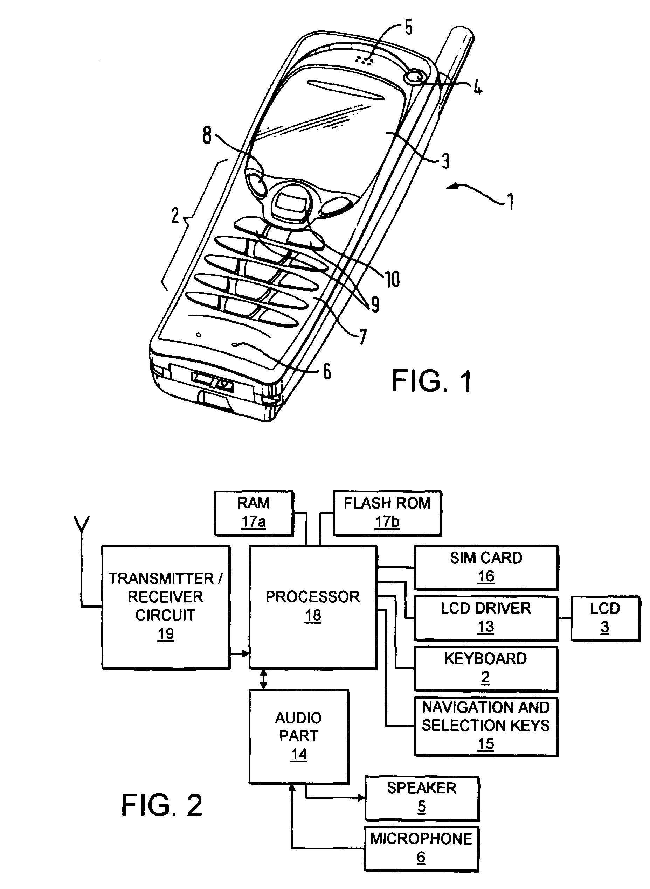

Figure 1 shows a preferred embodiment of a cellular communication apparatus, hereafter also referred to as a phone, according to the present invention. The phone, which is generally designated by 1, comprises a user interface having a keypad 2, a display 3, an on/off button 4, a speaker 5, and a microphone 6. The phone 1 according to the preferred embodiment is adapted for communication via a wireless telecommunication network, e.g. a cellular network. However, the phone could also have been designed for a cordless network. The keypad 2 has a first group 7 of keys as alphanumeric keys, by means of which the user can enter a telephone number, write a text message (SMS), write a name (associated with the phone number), etc. Each of the twelve alphanumeric keys 7 is provided with a figure "0-9" or a sign "#" or "*", respectively. In alpha mode each key is associated with a number of letters and special signs used in text editing. The keypad 2 additionally comprises two soft keys 8, two call handling keys 9, and a navigation key 10.

The two soft keys 8 have a functionality corresponding to what is known from the phones Nokia 2110™, Nokia 8110™ and Nokia 3810™. The functionality of the soft key depends on the state of the phone and the navigation in the menu by using a navigation key. The present functionality of the soft keys 8 is shown in separate fields in the display 3 just above the keys 8.

The two call handling keys 9 according to the preferred embodiment are used for establishing a call or a conference call, terminating a call or rejecting an incoming call.

The navigation key 10 is an up/down key and is placed centrally on the front surface of the phone between the display 3 and the group of alphanumeric keys 7. Hereby the user will be able to control this key by simply pressing the up/down key using his/her thumb. Since many experienced phone users are used to one-hand control, it is a very good solution to place an input key, requiring precise motor movements. Thus, the user may place the phone in the hand between the finger tips and the palm of the hand. Hereby, the thumb is free for inputting information.

Figure 2 schematically shows the most essential parts of a preferred embodiment of the phone. These parts being essential to understand the invention. The preferred embodiment of the phone of the invention is adapted for use in connection with a GSM network, but, of course, the invention may also be applied in connection with other phone networks, such as other kinds of cellular networks and various forms of cordless phone systems or in dual band phones accessing sets of these systems/networks. The microphone 6 records the user's speech, and the analogue signals formed thereby are A/D converted in an A/D converter (not shown) before the speech is encoded in an audio part 14. The encoded speech signal is transferred to control means 18. The control means 18 comprises a processor, which may support software in the phone. The control means 18 also forms the interface to the peripheral units of the apparatus, wherein the peripheral units can comprise a RAM memory 17a and a Flash ROM memory 17b, a SIM card 16, the display 3 and the keypad 2 (as well as data, power supply, etc.). The control means 18 communicates with a transmitter/receiver means 19, e.g. a circuit which is adopted to send/receive a request/respond to/from a telecommunication network. The audio part 14 speech-decodes the signal, which is transferred from the control means 18 to the earpiece 5 via a D/A converter (not shown).

The control means 18 is connected to the user interface. Thus, it is the control means 18 which monitors the activity in the phone and controls the display 3 in response thereto. Therefore, it is the control means 18 which detects the occurrence of a state change event and changes the state of the phone and thus the display text. A state change event may be caused by the user when he activates the keypad including the navigation key 10, and these type of events are called entry events or user events. However, the network communicating with the phone may also cause a state change event. This type of event and other events beyond the user's control are called non user events. Non user events comprise status change during call set-up, change in battery voltage, change in antenna conditions, message on reception of SMS, etc.

### The user interface

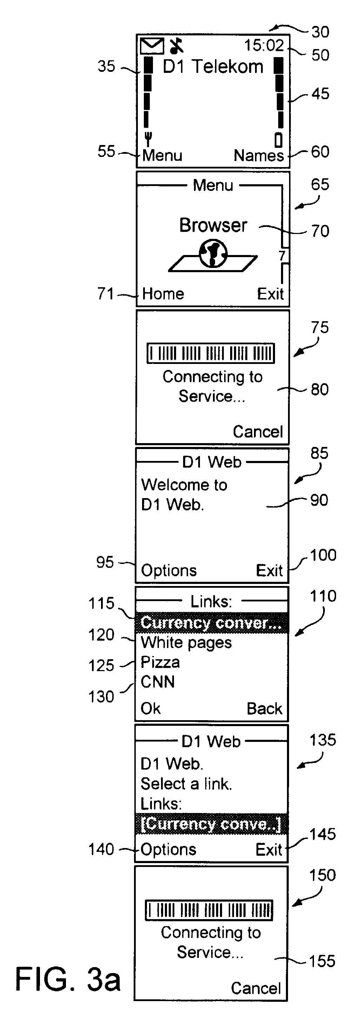

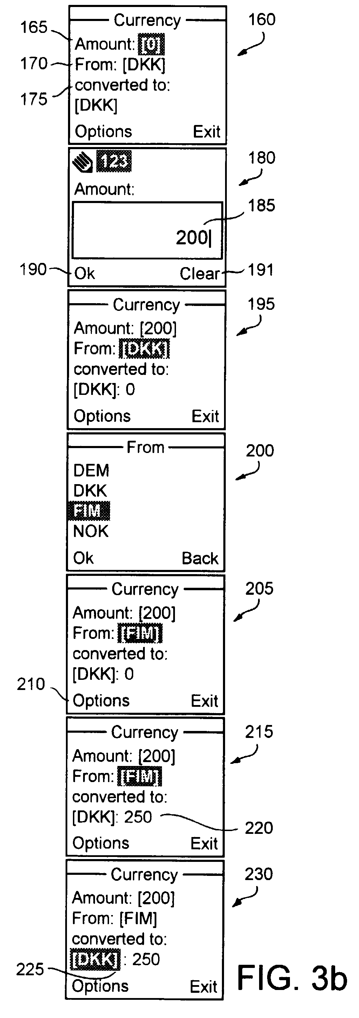

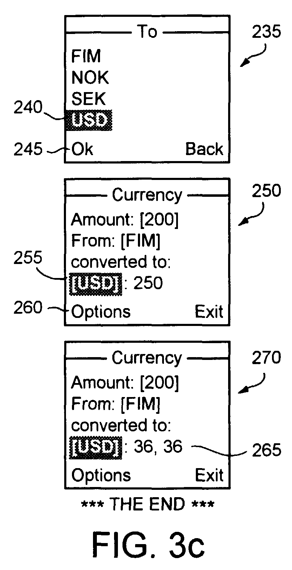

With reference to Fig. 3a, 3b and 3c, an example is shown on how the display in a user interface can act when arranged to a currency converter according to the present invention. The user interface may comprise the same elements as shown in Figure 1, i.e. a keypad 2, a display 3, an on/off button 4, a speaker 5 and a microphone 6. Also, it is the control means 18 in Figure 2 which controls the user interface. Starting from Figure 3a, there is a layout 30 presented on a display in a phone, as shown in Figure 1 and 2, which indicates signal strength 35 from the wireless telecommunication network "D1 Telekom" 40, the battery power 45 and a clock showing the time 50 in hours and minutes. Preferably, the display in the phone is an LCD (Liquid Crystal Display) display.

The display, can be controlled by the control means 18 as shown in Figure 2. The layout 30 presents an example of the phone in idle mode, i.e. when the phone is activated and awaiting an action, e.g. an incoming or outgoing call. In the bottom of the display there are two items which are denoted as "Menu" 55 and "Names" 60. If the user selects "Names" 60 he/she can e.g. access a built in phone book. If the user selects "Menu" 55, he/she can select among several different menus. The actual selection of features in the bottom of the display, like "Menu" and "Names", can be selected by means of the soft keys disclosed with reference to Figure 1.

One of the menus can be the next layout 65 called "Browser" 70. If the user chooses to use this menu, he/she can access different telecom related information services, e.g. Internet. One way of accessing this kind of information is to use the Wireless Application Protocol, WAP. The Wireless Application Protocol (WAP) is a result of continuous work to define an industry wide standard for developing applications over wireless communication networks. WAP is disclosed in the Wireless Application Protocol Architecture Specification; Version 30-Apr-1998; by Wireless Application Protocol Architecture Working Group;
http://www.wapforum.org/docs/technical.htm/arch-30-apr-98.pdf.

If the user chooses to select "Home" 71, this may lead to the next layout 75, which graphically indicates, "Connecting to Service" 80. This shows an example of how the phone is trying to establish a connection to e.g. Internet, by sending an access request to a server. If a connection is established, some kind of welcome text for a home page might be displayed, "Welcome to D1 Web." 90. If the user selects "Options" 100 a list of selections can be displayed as shown in the following layout 110. For example, the different choices could be "Currency converter" 115, "White pages" 120, "Pizza" 125, "CNN" 130, etc. In this example the user selects to use the currency converter 115, and browses further to this application in the next layout 135. In this layout 135 a browser display is shown with the selected item, which is indicated as a link to a service which provides a currency conversion. The user can select to send a request for the chosen item, by using the "Options" 140.

This leads to the next layout 150, as shown in layout 75, which graphically indicates, "Connecting to Service" 155. This shows an example of how the phone is trying to establish a connection to e.g. the application (currency converter 115), by sending a request to the server. If a connection is established, some kind of information text for the currency converter might be displayed. The following reference numbers refers to Figure 3b: 160-230. For example, the layout can be provided with different editable fields and selection list placeholders, which in this example are shown in square brackets ([ ]).The selection which is highlighted can indicate a default state of the selection. In these fields, the user can input an amount, "Amount:[ ]" 165, in one currency, "From:[DKK]" 170, converted into another currency, "converted to:[DKK]" 175. When the user is going to enter an amount 185, e.g. 200, on how much he/she would like to convert, the layout may e.g. change its outlook like it does in layout 180. Thereafter, the user may press Ok 190, whenever he/she is done, or clear the amount by selecting "Clear" 191.

The steps for choosing a first currency to convert from 170, and choosing a second currency to convert to 175, are repeated in the layouts 195-205. Thereafter, the user may select "Options" 210, in layout 205, which in this example activates the calculation of the currency conversion and displays the result 220 in the next layout 215.

If the user would continue with his/hers currency conversion, and choose another currency to convert to, the user selects the option "converted to [DKK]:" 225, which becomes highlighted upon selection, and is shown in layout 230. The following reference numbers refers to Figure 3c: 235-270. In the next layout 235, a selection list of available currencies are displayed. The user selects e.g. *USD* 240, and selects the entry by selecting "Ok" 245. The next layout 250 highlights the selected currency USD 255 to convert to.

Thereafter, the user may select "Options" 260, which in this example once again activates the calculation of the currency conversion and the result "[USD]: 36,36" 265 is displayed with the selected information in the next layout 270.

### The currency conversion

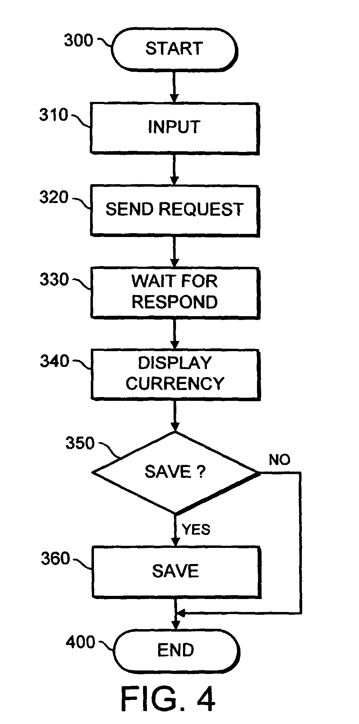

Figure 4 shows a flow chart, in accordance with the present invention, describing a way of converting currencies in a cellular communication apparatus. The cellular telecommunication apparatus in this example is of the same type as described in Figures 1 and 2, and the apparatus is hereafter also referred to as a phone. The phone can be provided with a feature which enables the user to convert different currencies, but can also be accessed from a service provider which provides this service over the telecommunication network. When the phone is activated and establishes, a wireless connection to a cellular network, e.g. when the phone roams to a new network, "START" 300, it is possible to communicate with different telecommunication services, e.g. WAP related services, i.e. a service which can be accessed from a server to the phone. By using this kind of service, it might be possible to obtain information from a server to the phone, e.g. by using SMS (Short Message Service), or a similar service.

First, the user may select a menu which allows conversion for different currencies. This menu can be a standard feature in the phone, or accessible from a service provider. If the feature is accessible from a service provider, the user can establish a connection to the provider and select a suitable service. If it is a standard feature in the phone, i.e. a built-in feature, it might offer a possibility to send a request for information, if the user wants that. Then the user gives an input 310 to the phone by using input means to give an input of a representation of a first currency, i.e. by pressing the alphanumeric keys shown in Figure 1. The input means is operatively arranged to control means, as disclosed earlier with reference to Figure 2. The input 310 can be e.g. a monetary amount of a first currency, which should be converted into a second currency, i.e. what exchange rate for the first currency is corresponding to in the second currency.

Thereafter, in accordance with the present invention, it will be possible to send this input as a request to the network, and e.g. using a service provider for this kind of service, "SEND REQUEST" 320. The request comprises a question about what the exchange rate for the first currency is corresponding to in the second currency. This request is sent by transceiver means, as shown in Figure 2, and can be sent as an SMS message (Short Message Service).

As an alternative to the manual input 310 by using the input means, it is also possible to jump over this step, and do the request automatically. This is done by providing the phone with memory means, comprising a representation of a first currency and the identity of a first telecommunication network. The memory means can for example be a SIM (Subscriber Identity Module) card, a RAM memory and/or a Flash ROM memory, as shown in Figure 2. In this case the first telecommunication network is identified by the control means. If the transceiver means the identifies a second telecommunication network, which is different to the first network, this can be detected by the control means. Then, the transceiver means sends the request, "SEND REQUEST" 320, as described earlier. Thus, in this situation the user does not have to do anything, since this procedure is done automatically.

The transceiver means will wait to receive a respond from the network, "WAIT FOR RESPOND" 330, and finally receive an answer to the given input. The respond can also be received as an SMS. Also, the transceiver means is operatively arranged to the control means, as shown in Figure 2. Naturally, if the phone does not receive any data, it should be possible to set a time out, in order to avoid an endless loop of waiting. When the data, i.e. the requested information, is received, the result, i.e. the exchange rate for the first currency corresponding to the second currency, is displayed on output means of the phone, e.g. a display, "DISPLAY CURRENCY" 340, by means of the control means. Thus, the output means is preferably an LCD display, and is also operatively arranged to the control means, as shown in Figure 2.

At this stage, the user might like to store/store the exchange rate for the first currency corresponding to the second currency, and use it again without being connected to the service provider. Therefore, it is possible to have an option to be displayed on the output means, asking the user if he/she would like to "SAVE?" 350 the received representation of the second currency to be used later. If the user chooses not to save the representation of the received second currency, the procedure can be completed, "END" 400, else the control means in the phone saves, "SAVE" 360, the received representation of the second currency in memory means, and ends the procedure.

If the input step 310 is jumped over, the received exchange rate for the first currency corresponding to the second currency, can be automatically to stored in the memory means. Naturally, this can also be done manually, which is only a question of designing the user interface.

Also, if the user has chosen to store the representation of the second currency, it is possible to use this currency again, and convert a monetary amount represented by the first currency inputted to the input means.

The invention is not limited to the above described and in the drawings shown examples of an embodiment but can be varied within the scope of the appended claims. For example, the representation of the second currency can stored in a list, provided in the memory means, wherein the list comprises at least two different representations of currencies. The list can e.g. be stored in the phone list of the phone. This allows e.g. the frequent flyer to have a lot different currencies available to be converted in an easy manner. The update of the different currencies can also be done automatically, if the input step 310, as disclosed in Figure 4, is jumped over.

## Claims

1. A cellular telecommunication apparatus (1) comprising:
- transceiver means (19), to send/receive a request/respond to/from a telecommunication network,
- input means (7-10), to give an input (310) of a representation of a first currency,
- output means (3), to display (340) what the exchange rate for the first currency is corresponding to in a second currency, and
- control means (18), which is operatively arranged to said transceiver (19) means, input means (7-10) and output means (3),
characterised in that said transceiver means (19) is arranged to send a request (320) to said network, comprising a question about what the exchange rate for the first currency is corresponding to in the second currency, and is arranged to receive a respond (330) comprising the requested information about the second currency, wherein said control means (18) is further arranged to display (340) what the exchange rate for the first currency is corresponding to in the second currency, on said output means (3).

2. Cellular telecommunication apparatus (1) according to claim 1, characterised in that said apparatus (1) is further provided with memory means (16,17a,17b), arranged to save (360) the exchange rate for the first currency corresponding to the second currency, and that said memory means is operatively arranged to said control means (18).

3. Cellular telecommunication apparatus (1) according to claim 2, characterised in that said control means (18) is further arranged to use the exchange rate for the first currency corresponding to the second currency, stored in the memory means (16,17a,17b), to convert a monetary amount represented by the first currency inputted to the input means (7-10).

4. Cellular telecommunication apparatus (1) according to claim 2 or 3, characterised in that said memory means is provided with a list comprising at least two different representations of currencies, and that said second currency is one of the representations in said list.

5. Cellular telecommunication apparatus (1) according to claim 1, 2 or 3, characterised in that said transceiver means (19) is further arranged to send/receive short messages (SMS).

6. Method for converting currencies in a cellular telecommunication apparatus (1), said apparatus being provided with transceiver means (19), input means (7-10), output means (3), and control means (18), wherein the method comprising the following steps:
- an input (310) of a first currency is inputted to the input means (7-10),
- the input is being sent as a request (320) by the transceiver means (19) to a telecommunication network, said request comprising a question about what the exchange rate for the first currency is corresponding to in a second currency,
- the network sends a respond (320) to said request comprising, information about the second currency, and
- the control means (18) display (340), on said output means (3), what the exchange rate for the first currency is corresponding to in the second currency.

7. A method according to claim 6, characterised in that the exchange rate for the first currency, corresponding to the second currency, is stored (360) in memory means (16,17a,17b), said memory means being operatively connected to said control means (18).

8. A method according to claim 7, characterised in that said control means (18) uses the second currency, and converts a monetary amount represented by the first currency inputted to the input means (7-10).

9. A method according to claim 7 or 8, characterised in storing a representation of second currency in a list provided in said memory means, wherein said list comprising at least two different representations of currencies.

10. A method according to claim 6, 7, 8 or 9, characterised in that said transceiver means (19) send/receive the request as a short message (SMS).

11. A cellular telecommunication apparatus (1) comprising:
- transceiver means (19), to identify the identity of different telecommunication networks and to send/receive a request/respond to/from the telecommunication network,
- memory means (16,17a,17b), comprising a representation of a first currency and the identity of a first telecommunication network,
- output means (3), to display (340) what the exchange rate for the first currency is corresponding to in a second currency, and
- control means (18), which is operatively arranged to said transceiver (19) means, memory means (16,17a,17b) and output means (3),
characterised in that upon identification of an identity of a second telecommunication network, said transceiver means (19) is further arranged to send a request (320) to said second telecommunication network, comprising a question about the exchange rate of the first currency, corresponding to the second currency, and arranged to receive a respond (330) comprising the requested information about the second currency, wherein said control means (18) is further arranged to store the exchange rate of the first currency corresponding to the second currency in the memory means (16,17a,17b).

12. Cellular telecommunication apparatus (1) according to claim 11, characterised in that said output means (3) is arranged to display (340) the second currency, received from the second telecommunication network.

13. Cellular telecommunication apparatus (1) according to claim 11 or 12, characterised in that said apparatus is further arranged with input means (7-10), to give an input (310) of a representation of the first currency.

14. Cellular telecommunication apparatus (1) according to claim 11, 12 or 13, characterised in that said memory means is provided with a list comprising at least two different representations of currencies, and that said second currency is one of the representations in said list.

15. Method for converting currencies in a cellular telecommunication apparatus (1), said apparatus being provided with transceiver means (19), memory means (16,17a,17b), output means (3), and control means (18), wherein the method comprising the following steps:
- storing a representation of a first currency, in the memory means (16,17a,17b),
- identifying the identity of a first telecommunication network, stored in the memory means,
- identifying the identity of a second the telecommunication network, by said transceiver means,
- sending a request (320) by the transceiver means (19) to said second telecommunication network, said request comprising a question about what the exchange rate for the first currency is corresponding to in a second currency,
- sending a respond (320) to said request, from the network, comprising, information about the second currency, and
- storing exchange rate of the first currency corresponding to the second currency in the memory means (16,17a,17b).

16. A method according to claim 15, characterised in displaying (340), what the exchange rate for the first currency is corresponding to in the second currency, on said output means (3).

17. A method according to claim 15 or 16, characterised in giving input (310) of a representation of the first currency by input means (7-10).

18. A method according to claim 15, 16 or 17, characterised in storing a representation of second currency in a list provided in said memory means, wherein said list comprising at least two different representations of currencies.
